# DEMANDE DE BREVET EUROPEEN

(11) **EP 1 174 656 A1**
(43) Date de publication de la demande: **23.01.2002**
(21) Numéro de dépôt: 01401857.6
(22) Date de dépôt: 11.07.2001
(51) Int. Cl.: F17C 3/12, F17C 13/00, B29C 63/00

(54) **Procédé pour décoller d'une struture métallique un habillage protecteur plastique et application de ce procédé**

(30) Priorité: 18.07.2000 FR 0009397
(71) Demandeur: GLI International, 75008 Paris (FR)
(72) Inventeur: Hamy, François, 75116 Paris (FR)
(74) Mandataire: Lerner, François

(57) **Abrégé**

L'invention concerne un procédé pour décoller d'une structure métallique pouvant être obturée de façon étanche, telle qu'une bouteille ou un conteneur(1), un habillage (3) protecteur plastique qui a été appliqué sur la structure(2).

Selon l'invention, on joue sur la différence de coefficient d'élasticité métal/plastique pour obtenir le décollement en dilatant ou en contractant la structure de l'intérieur.

L'invention s'applique sur des bouteilles ou conteneurs, en particulier de gaz liquéfiés, tels notamment que gaz de pétrole liquéfié, pour pouvoir séparer son habillage plastique de sa surface extérieure métallique et en vérifier l'état de conservation.

## Description

La présente invention a pour objet un procédé pour décoller d'une structure métallique pouvant être obturée de façon étanche, telle qu'une bouteille ou un conteneur, un habillage protecteur plastique qui a été appliqué sur la structure.

Le procédé s'applique notamment pour des bouteilles ou conteneurs destinés à contenir des gaz liquéfiés, en particulier des gaz de pétrole liquéfié, mais aussi bien à des bouteilles ou conteneurs pouvant contenir des déchets toxiques, par exemple des déchets radioactifs, des polluants chimiques ou d'autres produits devant être conservés de façon étanche.

La nécessité que l'on rencontre de procéder à une telle opération de décollement provient du fait que pour connaître de façon précise l'état de conservation de la paroi métallique de la structure, il est nécessaire de procéder préalablement au décollement de l'habillage protecteur plastique. Et de façon pratique, ce décollement n'est pas réalisable de façon satisfaisante en utilisant des procédés mécaniques classiques de découpage ou d'abrasion qui ne laissent pas intacte la paroi métallique dont on a décollé l'habillage, et qui ne permettent donc pas en conséquence de juger précisément de l'état de conservation de la paroi métallique avant décollement de l'habillage.

Conformément au procédé de l'invention, on joue sur la différence d'élasticité métal/plastique pour obtenir le décollement en dilatant ou en contractant la structure de l'intérieur.

Selon un mode de mise en oeuvre, on dilate la structure de l'intérieur en lui appliquant une pression positive d'un gaz ou d'un liquide de gonflage.

Selon un autre mode de mise en oeuvre, on contracte la structure de l'intérieur en lui appliquant une pression négative, en y faisant le vide. Ce mode de mise en oeuvre peut être utilisé plus particulièrement pour des conteneurs de grande dimension pour lesquels une dépression intérieure entraînera des forces de déformation considérables sur la structure.

Selon un autre mode de mise en oeuvre encore de l'invention, on pourra contracter la structure en la soumettant intérieurement à une température très basse, par exemple en y introduisant un gaz liquéfié à très basse température tel que méthane ou air liquide.

L'invention trouve son application notamment à l'examen de la conservation de conteneurs de toutes sortes comportant une âme ou paroi métallique revêtue d'un habillage protecteur plastique. La paroi peut être par exemple en acier, et l'habillage peut être en un matériau plastique tel que polyuréthane.

L'invention et sa mise en oeuvre apparaîtront plus clairement à l'aide de la description qui va suivre d'un exemple d'application illustré en référence aux dessins annexés, dans lesquels :
la figure 1 montre en coupe transversale une bouteille de type classique par exemple destinée à contenir du gaz de pétrole liquéfié ;
la figure 2 montre en coupe transversale la même bouteille à laquelle est appliqué conformément à l'invention un processus de gonflage.

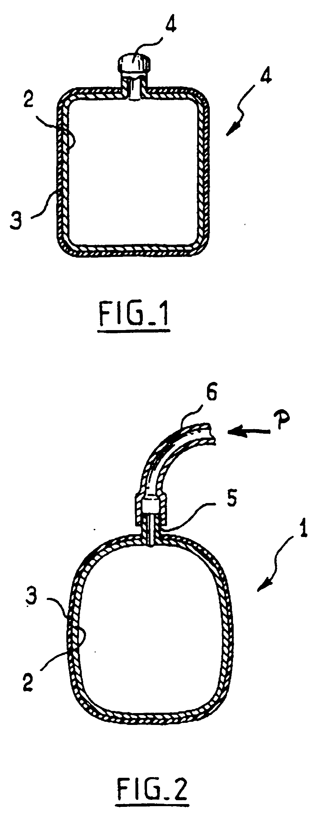

En se reportant tout d'abord à la figure 1, on a illustré une bouteille classique référencée 1 dans son ensemble composée essentiellement d'une paroi métallique 2 sur laquelle a été appliqué un habillage plastique protecteur 3 par exemple de polyuréthane. Si l'on veut s'assurer de l'état de conservation de la paroi métallique 2 qui est cachée par l'habillage plastique 3, il faut enlever l'habillage plastique sans détériorer la paroi extérieure métallique que l'on veut examiner. Et de façon pratique, cela s'avère très difficile car le revêtement plastique adhère très fortement à la paroi métallique.

Conformément à l'invention, et comme illustré à la figure 2, après avoir retiré le robinet 4 de la bouteille 1, on applique à l'entrée 5 de la bouteille ainsi dégagée un tuyau 6 d'amenée d'un fluide sous pression, par exemple de l'eau. On applique une pression P suffisante à ce fluide pour déformer de façon significative la bouteille 1, comme schématisé à la figure 2, sans aller cependant jusqu'à l'éclatement.

Ensuite, on relâche la pression, et l'on constate que du fait du differentiel entre les coefficients d'élasticité des deux matériaux, que l'habillage plastique s'est détaché automatiquement de l'âme métallique. Pour vérifier l'état de surface de la paroi métallique de la bouteille, il suffit donc de découper l'habillage plastique aux endroits voulus, ce qui laisse à nu sans aucune modification de son état précédent la surface de la paroi métallique. Il est ainsi possible de vérifier de façon sûre s'il existe par exemple des traces d'oxydation, de corrosion ou autres.

Des essais conduits sur des bouteilles en acier revêtues d'un habillage en polyuréthane destiné à contenir du gaz de pétrole liquéfié tel que du butane et ayant une contenance de 12,4 litres ont ainsi été gonflées sous une pression de 20 bars, soit un gonflement de la bouteille d'environ 3,8 litres. Le décollement du revêtement de polyuréthane était satisfaisant, et par découpage de la coque décollée du revêtement plastique, il était possible d'examiner parfaitement l'état de conservation de la surface extérieure de la paroi métallique de la bouteille.

Bien sûr l'homme de l'art saura déterminer par le calcul ou par l'expérimentation, les valeurs des pressions positives ou négatives qui devront être appliquées aux divers conteneurs à vérifier, ceci en fonction de la nature des conteneurs en question et de leur volume.

## Revendications

1. Procédé pour décoller d'une structure métallique pouvant être obturée de façon étanche, telle qu'une bouteille ou un conteneur(1), un habillage (3) protecteur plastique qui a été appliqué sur la structure(2), **caractérisé en ce qu'**on joue sur la différence de coefficient d'élasticité métal/plastique pour obtenir le décollement en dilatant ou en contractant la structure de l'intérieur.

2. Procédé selon la revendication 1, **caractérisé en ce qu'**on dilate la structure de l'intérieur en lui appliquant une pression positive d'un gaz ou d'un liquide de gonflage.

3. Procédé selon la revendication 1, **caractérisé en ce qu'**on contracte la structure de l'intérieur en lui appliquant une pression négative en y faisant le vide.

4. Procédé selon la revendication 1, **caractérisé en ce qu'**on contracte la structure en la soumettant intérieurement à une température très basse.

5. Application du procédé selon l'une quelconque des revendications précédentes, **caractérisée en ce qu'**on l'applique sur des bouteilles ou conteneurs, en particulier de gaz liquéfiés, tels notamment que gaz de pétrole liquéfié, pour pouvoir séparer son habillage plastique de sa surface extérieure métallique et en vérifier l'état de conservation.
